# EUROPEAN PATENT APPLICATION

(11) **EP 3 838 805 A1**
(43) Date of publication of application: **23.06.2021**
(21) Application number: 20214238.6
(22) Date of filing: 15.12.2020
(51) Int. Cl.: B65G 1/127, B65G 47/34, B65G 47/51, A01K 5/02

(54) **APPARATUS FOR PROCESSING MATERIAL AND METHOD FOR PROCESSING MATERIAL**

(30) Priority: 16.12.2019 IT 201900024048
(71) Applicant: Desit S.r.l., 66100 Chieti (CH) (IT)
(72) Inventor: Perilli, Fausto, 66020 San Giovanni Teatino (CH) (IT); Iezzi, Mauro, 66100 Chieti (CH) (IT); Evangelista, Marzio, 65019 Pianella (PE) (IT); Fina, Dario, 65015 Montesilvano (PE) (IT)
(74) Representative: PGA S.p.A.

(57) **Abstract**

The present invention relates to an apparatus (1) for automatically processing material comprising a storage (4). The storage (4) comprises a plurality of containers (5) configured to contain material to be released and a handling device (9) configured to move said containers (5) along a closed path. The apparatus (1) further comprises an extraction station (11) located downstream of the handling device (9) with reference to an advance direction of the material to be released along the apparatus (1) and configured to release, when the apparatus (1) is in use, said material. The apparatus (1) further comprises a control unit (8) communicatively connected with the handling device (9) and configured to control the handling device (9) so as to supply automatically, when the apparatus (1) is in use, the extraction station (11) with at least one container (5) at a time.

## Description

### FIELD OF THE INVENTION

The present invention relates to an apparatus for automatically processing material. The invention relates also to a method for automatically processing material.

The invention can find advantageous application for the processing of material of significant weight and / or potentially dangerous for an operator, for example due to high temperatures or high pressures or due to others process parameters or due to the nature of the material itself. By way of example, the invention can find an advantageous application for the processing of adhesive material, such as glue in the form of blocks or granules.

The invention can also find advantageous application for the processing of material in places where there is not constantly an operator available on site or in places that are not easily accessible, or more simply if it is intended to rationalize the supply of material, also reducing costs associated with this supply. By way of example, the invention may find advantageous application for processing food material, such as feed for animals.

### STATE OF ART

There are known apparatuses which allow loading of material and subsequent extraction of material; these apparatuses are for example used for processing glue.

Apparatuses for applying glue to a substrate entail loading it into a fuser suitable for bringing the glue to a liquid state, to allow the subsequent feeding of an applicator. These known apparatuses provide that the glue loading to the fuser is carried out manually by the operator. The known apparatuses have at least the following drawbacks.

First, manually loading glue to the fuser is not always efficient as it is a function of the experience of the single operator who loads the glue into the fuser, by opening a door designed for this purpose, and can therefore vary according to the operator in charge for loading the glue.

Furthermore, loading glue manually by an operator can be dangerous due to the high melting temperatures that the glue reaches in the fuser. A risk faced by the operator who loads glue to the fuser is due to the fact that the operator is exposed to possible splashes of glue at high temperature, which may occur in the glue melting operation. The operator's exposure to glue splashes is particularly undesirable as it is highly dangerous for the operator's physical safety. In addition to possible burns, the operator is still subjected to inhalation of somewhat unhealthy vapors.

Finally, the manual loading of glue is a complex operation which means that the fuser door remains open longer than necessary, resulting in a lowering of the fuser temperature and a consequent loss of energy efficiency of glue application equipment.

### PURPOSE OF THE INVENTION

The purpose of the present invention is therefore to solve at least one of the drawbacks and / or limitations of the previous solutions, drawbacks and / or limitations which, although having been complained with particular reference to the equipment for the application of glue, are found similar in apparatuses for the processing of different materials, for example in equipment for the distribution of animal feed.

A first purpose of the present invention is to provide an apparatus for automatically processing material that allows to optimize the processing of material, with consequent favorable effects on times and costs of the processing. It is also a second purpose of the present invention to provide an apparatus for automatically processing material, having a high efficiency in material processing. It is also a third purpose of the present invention to provide an apparatus for automatically processing material, able to increase the safety of any operator assigned to the equipment.

It is also a purpose of the present invention to provide an apparatus for automatically processing material, which has a high capacity of material load in a small space.

It is also a purpose of the present invention to provide an apparatus for automatically processing material, which allows an accurate control of the release and / or extraction of the processed material.

It is also a purpose of the present invention to provide an apparatus for automatically processing material, which allows an adequate timing of the release and / or extraction of the processed material, depending of the subsequent use of the material.

Further, with regard in particular to the application of glue, the present invention aims to provide an apparatus to feed a melting station located downstream of it and to promote safe, reliable and efficient operation of this melting station.

The purposes described above with reference to an apparatus for automatically processing material are shared by a method for automatically processing material.

These aims and others, which will become more apparent from the following description, are substantially achieved by an apparatus for automatically processing material and by a method for automatically processing material in accordance with one or more of the attached claims and / or with one or more of the following aspects.

### SUMMARY

In a 1st aspect, an apparatus is provided for automatically processing material comprising:
- a storage configured to store material to be released and comprising:
   ∘ a plurality of containers, each container being configured to contain material to be released;
   ∘ a handling device configured to move said plurality of containers
- an extraction station configured to release, in conditions of use of the apparatus, said material, in which the handling device is configured to automatically feed, in conditions of use of the apparatus, the extraction station with at least one container at a time.

In a 2nd aspect according to the 1st aspect, the apparatus comprises a control unit communicatively connected with the handling device and configured to control the handling device to feed automatically, in conditions of use of the apparatus, the extraction station with at least one container at a time.

In a 3rd aspect, an apparatus is provided for automatically processing material comprising:
- a storage configured to store material to be released and comprising:
   ∘ a plurality of containers, each container being configured to contain material to be released,
   ∘ a handling device configured to move said plurality of containers,
- an extraction station configured to release, in conditions of use of the apparatus, said material,
- a control unit communicatively connected with the handling device and configured to control the handling device to automatically feed, in conditions of use of the apparatus, the extraction station with at least one container at a time.

In a 4th aspect according to the 1st or 2nd or 3rd aspect, the extraction station is arranged downstream of the handling device with reference to a direction of advancement of the material to be released along the apparatus.

In a 5th aspect according to any one of the preceding aspects, the handling device is configured to move said plurality of containers along a closed path.

In a 6th aspect according to any one of the preceding aspects, the storage includes a carousel.

In a 7th aspect according to any one of the preceding aspects, the storage is of the dynamic type.

In an 8th aspect according to any one of the preceding aspects, the handling device comprises at least one motorized chain to which the containers of said plurality of containers are engaged, said at least one motorized chain defining said closed path or a portion of said closed path and being configured to move said plurality of containers along said closed path.

In a 9th aspect according to any one of the preceding aspects, the handling device comprises a first motorized chain and a second motorized chain opposed each other, each motorized chain defining said closed path and being configured to move said plurality of containers along said closed path.

In a 10th aspect according to the 9th aspect, the first motorized chain and the second motorized chain are synchronized with each other.

In an 11th aspect according to the 9th or 10th aspect, the control unit is configured to synchronize the first motorized chain and the second motorized chain.

In a 12th aspect in accordance with the 9th or 10th or 11th aspect, the control unit is configured to move the first motorized chain and the second motorized chain substantially at the same speed.

In a 13th aspect according to any one of the preceding aspects, the apparatus includes at least one support rod configured to support one or more containers, each supported container pivoting around the support rod, preferably in order to substantially maintain a predetermined orientation independently of the positioning of said one or more containers in said storage.

In a 14th aspect according to the 13th aspect, the apparatus comprises a plurality of support rods, each support rod supporting a respective container, each container pivoting around the respective support rod.

In a 15th aspect according to the 13th or 14th aspect, each support rod develops between a first end and a second end, the first motorized chain being engaged to each support rod at the first end and the second motorized chain being engaged to each support rod at the second end.

In a 16th aspect according to any one of the preceding aspects, each container is configured to operate at least between a laden condition and an unladen condition, in the laden condition each container containing material to be released above a predetermined material threshold and in the unladen condition each container containing material to be released below a predetermined material threshold or being devoid of material to be released.

In a 17th aspect according to the 16th aspect, the control unit is configured, in conditions of use of the apparatus, for:
- detecting the unladen condition of a first container of said plurality of containers arranged in correspondence or in proximity of the extraction station,
- optionally, control the handling device for moving the first container away from the extraction station,
- control the handling device to automatically feed the extraction station with a second container.

In an 18th aspect according to the 16th or 17th aspect, the apparatus further comprises at least a load sensor configured to detect at least one of the load conditions of the container and the unladen condition of the container.

In a 19th aspect according to the 18th aspect, the control unit is communicatively connected with the load sensor and being configured to:
- receive at least one load information relating to the laden condition or the unladen condition of the first container detected by the load sensor,
- control the handling device to move, or inhibit the movement of, the first container and / or the second container according to said loading information relating to the laden condition or to the unladen condition of the first container detected by the load sensor.

In a 20th aspect according to the 18th or the 19th aspect, the control unit is communicatively connected with the load sensor and is configured to:
- receive at least one load information relative to the unladen condition of the first container detected by the load sensor,
- control the handling device to move the first container away from the extraction station,
- control the handling device to move the second container towards the extraction station.

In a 21st aspect according to the 18th or 19th or 20th aspect, the control unit is communicatively connected with the load sensor and is configured to:
- receive at least one load information relating to the laden condition of the first container detected by the load sensor,
- inhibit the movement, for example by blocking the handling device, of the first container away from the extraction station,
- inhibit the movement, for example by blocking the handling device, of the second container approaching the extraction station.

In a 22nd aspect according to any one of the preceding aspects, the container has an elongated conformation extending along a main direction of development, the load sensor comprising a light source configured to emit, in conditions of use of the apparatus, a light beam along an emission direction coinciding or substantially parallel to said prevailing development direction, the load sensor further comprising a reflector, for example a reflective device, aligned to said emission direction and configured to reflect the light beam.

In a 23rd aspect according to the 22nd aspect, the reflector is configured to reflect the light beam back along the emission direction towards the light source.

In a 24th aspect according to the 22nd or 23rd aspect, the light source and the reflector are opposite to the container along said prevailing development direction.

In a 25th aspect according to the 22nd or 23rd or 24th aspect, the load sensor is configured to detect a return of the light beam to or towards the light source.

In a 26th aspect according to any of the 18th to 25th aspects, the load sensor is of the photoelectric type.

In a 27th aspect according to any one of the preceding aspects, the control unit is configured to:
- progressively calculate, in conditions of use of the apparatus, a number of containers that assume the unladen condition,
- optionally, report a prevailing unladen condition of the storage in which a majority of containers of said plurality of containers, or all containers of said plurality of containers assume the unladen condition.

In a 28th aspect according to any one of the preceding aspects, the apparatus comprises a user interface, the control unit being communicatively connected with the user interface.

In a 29th aspect according to the 27th and 28th aspect, the control unit is configured to report said prevailing unladen condition of the storage in correspondence with the user interface.

In a 30th aspect according to any one of the preceding aspects, the control unit is configured to start extracting material after detecting a sufficient storage laden condition, the condition of sufficiently laden condition being a condition in which a certain number of containers of said plurality of containers assumes the laden condition or in which all the containers of said plurality of containers assume the laden condition.

In a 31st aspect according to the 28th and 30th aspects, the user interface is configured to allow an operator to set a sufficient laden condition.

In a 32nd aspect according to any one of the preceding aspects, the apparatus further comprises a load sensor, the control unit being communicatively connected with said load sensor and being configured to progressively calculate, in conditions of use of the apparatus and based on information received from said load sensor, a number of containers which assume the unladen condition.

In a 33rd aspect according to the 32nd aspect, said load sensor is a further load sensor compared to the load sensor configured to detect at least one between the laden condition and the unladen condition of the container.

In a 34th aspect according to the 32nd aspect, said load sensor is integrated in said load sensor configured to detect at least one between laden and unladen condition of the container.

In a 35th aspect according to the 32nd or the 33th or the 34th aspect, said load sensor comprises a light source configured to emit, in conditions of use of the apparatus, a light beam along a direction of emission coinciding or substantially parallel to said prevailing development direction of the container, said load sensor further comprising a reflector, for example a reflective element, aligned with said emission direction and configured to reflect the light beam.

In a 36th aspect according to the 35th aspect, the reflector of said load sensor is configured to reflect the light beam back along the emission direction towards the reflector of said load sensor.

In a 37th aspect according to the 35th or 36th aspect, the light source and the reflector of said load sensor are opposed to the container along said prevalent development direction.

In a 38th aspect according to any one of the 32nd to 37th aspects, said load sensor is configured to detect a return of the light beam to or towards the light source.

In a 39th aspect according to any one of the 32nd to 38th aspects, said load sensor is of the photoelectric type.

In a 40th aspect according to any one of the preceding aspects, the handling device is configured to move, along the closed path, said plurality of containers between an initial position and a final position and a plurality of intermediate positions between the initial position and the final position, the succession of positions that each container assumes from the initial position to the final position defining a cycle.

In a 41st aspect according to any one of the preceding aspects, each container comprises a supporting case body and an extractable element, such as a drawer, coupled in an extractable way to the supporting case and configured to operate between a rest condition, in which the extractable element is housed in the supporting case, and an extraction condition, in which the extractable element is at least partially extracted from the supporting case.

In a 42nd aspect according to the 41st aspect, the control unit is configured to:
- determine the transition of the extractable element from the rest condition to the extraction condition,
- in the extraction condition of the extractable element, determine the extraction of the material.

In a 43rd aspect according to the 41st or 42nd aspect, the supporting case comprises a first end and a second end opposite to each other, the extractable element being extractable from the supporting case in correspondence with at least one of the first end and the second end.

In a 44th aspect according to the 41st or 42nd or 43rd aspect, the extractable element is extractable from the supporting case exclusively in correspondence with one of the first end and the second end.

In a 45th aspect according to any one of the 41st to 44th aspects, the extractable element in extractable from the supporting case both in correspondence with the first end and the second end, wherein in particular the extraction of said extractable element through said first end is functional to an operation of extracting material from said container and the extraction of said extractable element through said second end is functional to an operation of loading material into said container.

In a 46th aspect according to any one of the 41st to 45th aspects, the container includes a guide configured to guide the extractable element in the transition from the rest condition to the extraction condition.

In a 47th aspect according to the 46th aspect, the guide is configured to allow the extraction by translation of the extractable element from the supporting case.

In a 48th aspect according to the 46th aspect, the guide is configured to determine a roto-translation of the extractable element upon transition of the extractable element from the rest condition to the extraction condition.

In a 49th aspect according to the 46th or the 47th or the 48th aspect, the guide is of the telescopic type.

In a 50th aspect according to any one of the 41st to 49th aspects, the extractable element comprises at least one compartment configured to contain, in conditions of use of the apparatus, material to be released.

In a 51st aspect according to any one of the 41st to 50th aspects, the extractable element is divided into two or more compartments, each compartment being configured to contain, in conditions of use of the apparatus, material to be released.

In a 52nd aspect according to the 51st aspect, the extractable element comprises at least one separation wall configured to divide an internal volume of the extractable element in two or more compartments.

In a 53rd aspect according to any one of the 41st to 52nd aspects, the supporting case comprises an occlusion portion, the extractable element comprising an extraction portion facing, in the rest condition of the extractable element, to the occlusion portion.

In a 54th aspect according to the 53rd aspect, the supporting case comprises a bottom, the occlusion portion being defined by said bottom, the extraction portion of the extractable element being a lower portion of the extractable element facing, in the rest condition of the extractable element, to said bottom.

In a 55th aspect according to the 53rd or 54th aspect, the extraction portion having at least one extraction opening configured to allow the extraction, in the extraction condition of the extractable element, of said material, in the rest condition of the extractable element the occlusion portion being configured to come into contact with the material to be released, the extraction opening preferably being a through opening.

In a 56th aspect according to the 48th aspect and the 53rd aspect, the roto-translation of the extractable element causes a commutation in the orientation of the extraction portion of the extractable element compared to the occlusion portion of the support case.

In a 57th aspect according to any one of the 41st to 56th aspects, the control unit is configured to control the extraction, in conditions of use of the apparatus, of at least one extractable element from the respective supporting case of the container exclusively when said container is in the laden condition.

In a 58th aspect according to any one of the preceding aspects, the apparatus further comprises an extractor configured to operate on at least one container of said plurality of containers and to at least partially move said at least one container so as to release, in conditions of use of the apparatus, said material. In a 59th aspect according to any one of the aspects from 41st to 58th, the apparatus further comprises an extractor configured to extract the extractable element of a container arranged in correspondence or in proximity of the extraction station.

In a 60th aspect according to the 58th or 59th aspect, the control unit being communicatively connected with the extractor and being configured to:
- detect a placement of a container in correspondence or in proximity of the extraction station,
- determine a coupling between extractor and extractable element of said container positioned in correspondence or in proximity of the extraction station,
- check the extractor to at least partially extract the extractable element from the supporting case of said container.

In a 61st aspect according to the 58th or 59th or 60th aspect, the apparatus further comprises at least one proximity sensor configured to detect a condition of proximity of the container to the extractor.

In a 62nd aspect according to the 61st aspect, the control unit being communicatively connected with the proximity sensor and being configured to:
- receive at least one proximity information relating to the condition of proximity of the container to the extractor detected by the proximity sensor
- check the extractor to at least partially extract the extractable element from the supporting case of said container only when the container is in said proximity condition.

In a 63rd aspect according to any one of the 58th to 62nd aspects, the extractor is arranged in correspondence or in proximity of the extraction station, optionally the extractor being put beside the extraction station.

In a 64th aspect according to any one of the 58th to 63rd aspects, the extractor comprises at least one rail, advantageously at least two rails, and a slide movable along said rail, said slide being configured to translate away from the supporting case of a container in the extracted condition of the extractable element of said container.

In a 65th aspect according to the 64th aspect, the extractor comprises an extractor's frame configured to engage the guide and the slide to a box-like body of the apparatus in proximity to a window from which the extractable element can be extracted at or near the extraction station.

In a 66th aspect according to any one of the 58th to 65th aspects, each container comprises an engagement element integral with the extractable element, the extractor comprising a respective engagement element integral with the slide, said engagement elements being configured to be engaged with each other and to determine the extraction of the extractable element from the support case.

In a 67th aspect according to the 66th aspect, each engagement element includes a magnet or an electromagnet or a mechanical hook.

In a 68th aspect according to any one of the 41st to 67th aspects, the apparatus includes an extraction sensor configured to detect an extraction condition of the extractable element.

In a 69th aspect according to the 68th aspect, the control unit is communicatively connected to the extraction sensor and is configured to receive at least one extraction information relating to the extraction condition of the extractable element.

In a 70th aspect according to any one of the 41st to 69th aspects, the apparatus includes a limit switch sensor configured to detect the reaching of a limit switch by the extractable element upon transition of the extractable element from the rest condition to the extraction condition and / or upon transition of the extractable element from the extraction condition to the rest condition.

In a 71st aspect according to the 70th aspect, the control unit is communicatively connected to the limit switch sensor and is configured to receive, from the limit switch sensor, a limit switch information of the extractable element.

In a 72nd aspect according to any one of the 41st to 71st aspects, the control unit is configured to:
- detect an anomaly condition of the apparatus, such as a lack of power supply to the apparatus or a failure of the apparatus,
- check the current positioning of the extractable element, for example communicating with the limit switch sensor or with the extraction sensor,
- if the extractable element is in an intermediate condition between rest condition and extraction condition, or vice versa, check the extractor to finalize the transition of the extractable element from the rest condition to extraction condition, and / or vice versa.

In a 73rd aspect according to any one of the preceding aspects, the apparatus includes a loading station configured to load containers with material to be released, said apparatus preferably further including access means to said loading station, said access means comprising preferably at least one opening made in an upper wall or in a side wall of said storage.

In a 74th aspect according to any one of the preceding aspects, the apparatus comprises at least one processing station arranged downstream of the extraction station and configured to process the dispensed material.

In a 75th aspect according to any one of the preceding aspects, the apparatus is an apparatus for automatically processing adhesive material, such as glue.

In a 76th aspect according to the 75th aspect, the apparatus comprising a fusion station arranged downstream of the extraction station and configured to melt the dispensed adhesive material.

In a 77th aspect according to the 75th or 76th aspect, the extraction station is configured to release adhesive material at the fusion station, the apparatus comprising in particular an application station arranged downstream of the melting station and configured to apply the molten adhesive material to a substrate, the application station being preferably in fluid communication with the fusion station, the apparatus optionally comprising at least one pipe, for example at least one hose, configured to convey the molten adhesive material from the melting station to the application station.

In a 78th aspect according to the 77th aspect, said melting station comprises a melting chamber and an access door to said melting chamber.

In a 79th aspect according to the 78th aspect, to said access door of said associated melting station are associated opening and / or closing means, in particular said opening and / or closing means comprising at least one pneumatic or hydraulic cylinder.

In an 80th aspect according to the 64th aspect and the 79th aspect, the opening and / or closure means of said access door of said melting station are integrated into said extraction station and / or in which the operation of said opening and / or closure means is synchronized with the operation of said slide of said extractor. In an 81st aspect according to any one of the preceding aspects, the apparatus comprises a box-like body, housing at least the storage.

In an 82nd aspect according to any one of the preceding aspects, the apparatus comprises an access door configured to operate at least between an access condition, in which it allows access to the storage, and one occlusion condition, in which it prevents access to the storage.

In an 83rd aspect according to the 81st and 82nd aspects, the access door is engaged to an upper portion or to a side portion, such as a rear portion, of the box-like body.

In an 84th aspect according to the 82nd or 83rd aspect, the access door is rotatable and / or translatable with respect to said upper portion or to a lateral portion, such as a rear portion of the box-like body.

In an 85th aspect according to the 82nd or 83rd or 84th aspect, the apparatus comprises an opening sensor operating on the access door and configured to detect when the access door is in the access condition.

In an 86th aspect according to the 85th aspect, the control unit is communicatively connected to the opening sensor and being configured to:
- receive at least one information relating to the access condition or the occlusion condition of the access door,
- prevent the processing of material, for example prevent the extraction of material and / or handling of containers, when the access door is in the access condition.

In an 87th aspect, a method is provided for automatically processing material comprising the following steps:
- arranging an apparatus according to any one of the previous aspects and / or the attached apparatus claims,
- automatically feed the extraction station with at least one container containing material to be released, the step of automatic feeding the extraction station with at least one container containing material to be released including handling, by the handling device, said at least one container,
- releasing the material contained in at least one said container in correspondence of the extraction station.

In an 88th aspect according to the 87th aspect, the step of moving, by means of the handling device, said at least one container comprises moving, by means of the handling device, said at least one container along a closed path.

In an 89th aspect according to the 87th aspect or the 88th aspect, the step of moving, by means of the handling device, said at least one container along a closed path comprises moving, by means of the handling device, each container of said plurality of containers along a closed path.

In a 90th aspect according to the 87th or 88th or 89th aspect, the step of releasing the material contained by the container at the extraction station comprises draining said material from the container.

In a 91st aspect according to any one of the 87th to 90th aspects, the method also includes the steps of:
- detecting an empty condition of said at least one container,
- automatically feed the extraction station with an additional container.

In a 92nd aspect according to the 91st aspect, after the step of detecting an unladen condition of said at least one container, the method comprises the step to move said at least one container away from the extraction station.

In a 93rd aspect in accordance with the 92nd aspect, the step of moving said at least one container away from the extraction station, and the step of automatically feeding an additional container to the extraction station, are carried out simultaneously by means of the handling device.

In a 94th aspect according to any one of the 87th to 93rd aspects, the method comprises the step of determining the transition of the extractable element from a rest condition to an extraction condition, the step of releasing the material contained by the container at the extraction station being carried out with the extractable element in the extraction condition.

In a 95th aspect according to the 94th aspect, the step of determining the transition of the extractable element from the rest condition to the extraction condition comprises at least partially extracting the extractable element from the support case.

In a 96th aspect according to any one of the 87th to 95th aspects, the method includes the steps of:
- detecting at least one between the laden condition and the unladen condition of the container,
- moving said container according to the step of detecting at least one between the laden condition and the unladen condition of the container by means of said loading sensor.

In a 97th aspect according to the 96th aspect, the step of detecting at least one of the laden condition and the unladen condition of the container includes:
- emitting, by means of said load sensor, a light beam along an emission direction coincident or substantially parallel to said prevailing development direction of the container,
- reflecting back, by means of said reflector, the light beam along the emission direction towards said load sensor.

In a 98th aspect according to any one of the 87th to 97th aspects, the method includes the steps of:
- progressively calculate a number of containers that assume the unladen condition,
- optionally, report a prevailing unladen condition of the storage in which a majority of the containers of said plurality of containers or all containers of said plurality of containers assume the unladen condition.

In a 99th aspect according to the 98th aspect, progressively calculate a number of containers assuming the unladen condition includes:
- emitting, by means of said load sensor, a light beam along an emission direction coincident or substantially parallel to said prevailing development direction of the container,
- reflecting back, by means of the reflector of said load sensor, the beam of light along the emission direction towards said load sensor,
- iterate, for each container of said plurality of containers, the step of emitting, by means of said load sensor, a light beam along an emission direction coincident or substantially parallel to said prevailing development direction of the container and the phase of reflecting back, by means of said reflector of said load sensor, the light beam along the emission direction towards said load sensor.

In a 100th aspect according to the 98th or 99th aspect, the step of reporting a prevailing unladen condition of the storage in which a majority of containers of said plurality of containers or all containers of said plurality of containers assume the unladen condition comprises reporting said condition to a user interface of the apparatus.

### BRIEF DESCRIPTION OF THE DRAWINGS

Some embodiments and some aspects of the invention will be described below with reference to the attached drawings, provided for indicative purposes only and therefore not limiting in which:
- Figure 1 is a view of the apparatus according to an embodiment of the present invention,
- Figure 2 is a side view of the apparatus of figure 1,
- Figure 3 is a sectional view of the apparatus of figure 2, in which the section is made according to the sectioning plan A-A illustrated in figure 2,
- Figure 4 is a detail view of the extraction station of an apparatus in according to an embodiment of the present invention,
- Figure 5 is a sectional view of the apparatus of Figure 2 and related details, in which the section is made according to the sectioning plane B-B illustrated in figure 2,
- Figure 6 is a sectional view of the apparatus of figure 2 and of a related detail, in which the section is made according to the sectioning plan C-C shown in figure 2,
- Figure 7 is a sectional view of the apparatus of figure 2 and related details, in which the section is made according to the sectioning plan G-G illustrated in figure 2,
- figure 8 illustrates the storage of the apparatus of figure 1 and of the apparatus of figure 4,
- figure 9 illustrates the extractor of the apparatus of figure 1 and of the apparatus of figure 4,
- Figure 10 illustrates a container of the apparatus of figure 1 and of the apparatus of figure 4, in which the extractable element is in the rest condition,
- Figure 11 illustrates a container of the apparatus of Figure 1 and of the apparatus of figure 4, in which the extractable element is in the extraction condition.

### DEFINITIONS AND CONVENTIONS

Please note that in the present detailed description corresponding parts illustrated in the various figures are indicated with the same numerical references.

Figures could illustrate the apparatus object of the invention by means of non-scale representations; therefore, parts and components illustrated in the figures relating to the apparatus could concern exclusively schematic representations. In the context of this description, the use of terms such as "above", "upper", "below", "lower", "beside", "side", "laterally", "sideways", "horizontal", "horizontally", "vertical", "vertically", "front", "frontally", "rear", "rearward" and similar refers, unless otherwise specific indications, to at least a spatial orientation that normally the apparatus object of the invention can assume in operating conditions or conditions of use. In this regard, see the attached figures illustrating at least one possible spatial orientation of the apparatus object of the invention. Unless different specific indications, the use of terms "condition" or "configuration" maybe used interchangeably in the context of this discussion.

Some definitions that can be used for the purposes of the intelligence of the present invention are given below:
- the terms "upstream" and "downstream" are to be understood with reference to the kinematic chain underlying the present invention, therefore, except where otherwise indicated, such expressions refer to the arrangement of at least one component or one station of the apparatus with respect to at least one other component or other station of the apparatus with reference to a direction of material advancement along the apparatus itself;
- the expression "closed path" means a path defined by a line, for example an imaginary line, defining a closed or substantially closed perimeter. An example of a closed path is a closed loop. Along the closed path it is possible to assume repeatedly the same position following successive cycles. A single closed path travel defines a cycle. A closed path can be implemented by a carousel.

### DETAILED DESCRIPTION

### Apparatus

In the attached figures, with the numerical reference 1 has been overall indicated an apparatus for processing material. Apparatus 1 is configured for automatically processing material.

Apparatus 1 can comprise a box-like body 2 defining an internal volume. The box-like body 2 constitutes a casing of the apparatus 1. The box-like body 2 can present at least one window 2a suitable for allowing extraction from the internal volume, and the insertion in the internal volume of at least one component of the apparatus 1 such as described below.

Apparatus 1 further comprises an access door 3 designed to manage or prevent access to the internal volume and, consequently, to components housed therein. The access door 3 is configured to operate at least between an access condition, in which it allows access to the internal volume, and an occlusion condition, in which it prevents access to the internal volume. The access door 3 is designed to allow a user to access the internal volume in order to load material inside the box-like body 2. The access door 3 can be engaged to an upper portion or to a lateral portion, such as a rear portion of the box-like body 2 (conventionally assuming the portion housing the window 2a as the front portion of the box-like body 2).

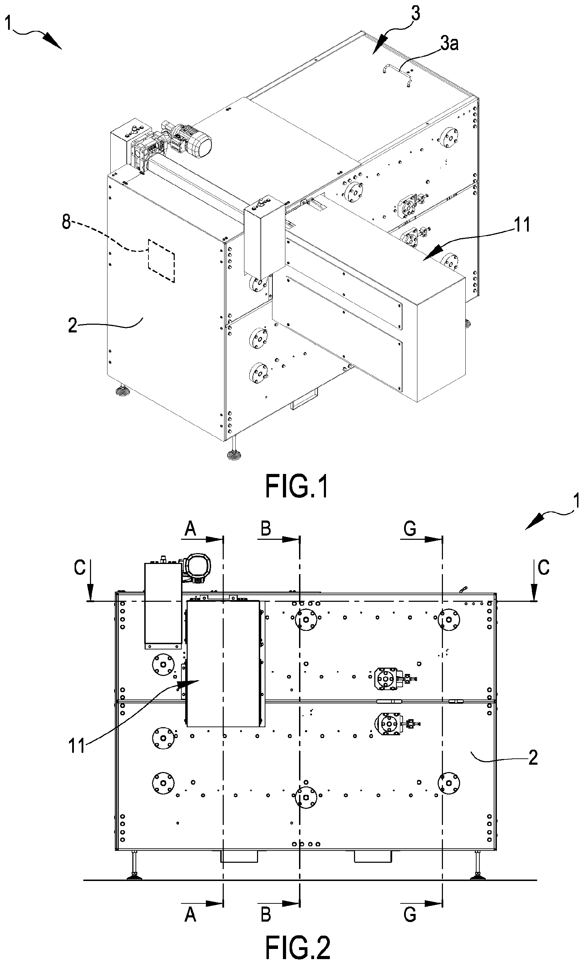

In the embodiment illustrated in Figure 1, the access door 3 is engaged to the upper portion of the box-like body 2. As shown in Figure 1, the access door 3 can be equipped with a handle 3a configured to facilitate the movement of the access door 3 from the occlusion condition to access condition and vice versa. Access door 3 can be of the revolving or sliding type and can be equipped with a constraint, such as a lock, configured to prevent or ensure, by means of appropriate unlocking, the transition of access door 3 from occlusion to access condition.

Apparatus 1 further comprises a storage 4 configured for storing material to be released. In greater detail, the apparatus 1 is configured for automatically processing material at least after loading material in the storage 4. In the embodiment referred to in the attached figures, the storage 4 is housed inside the box-like body 2. In alternative embodiments, the storage 4 can be partially housed inside and partially outside the box-like body 2. Access to storage 4 is managed by means of the access door 3, which in the access condition allows access to storage 4 and in the occlusion condition prevents access to storage 4. In the embodiment in which the access door 3 is engaged to the upper portion of the box-like body 2, the storage 4 is configured to be loaded from above. In a further possible embodiment, the access door 3 is engaged to a lateral portion or to a rear portion of the box-like body 2 and the storage 4 is configured to be loaded laterally or rearward. Storage 4 can be configured, in the access condition of the access door 3, to be loaded manually, for example by a trained operator, or automatically, for example by means of a robot or a robotic arm. As will be seen in greater detail below, the storage 4 is of the dynamic type and operates substantially as a carousel.

The apparatus 1 can further comprise an opening sensor operating on the access door 3 and configured to detect when access door 3 is in the access condition. The provision of at least one opening sensor allows to automate the apparatus with reference to the detection of a potentially dangerous condition of the apparatus 1; the opening condition of the access door 3 can be a potentially dangerous condition of the apparatus 1 as it can affect the correct loading of the material, especially when it is done manually by an operator. The opening sensor allows to increase the safety of the apparatus 1 as allows the apparatus 1 to prevent the processing of material when the access door 3 is in the access condition.

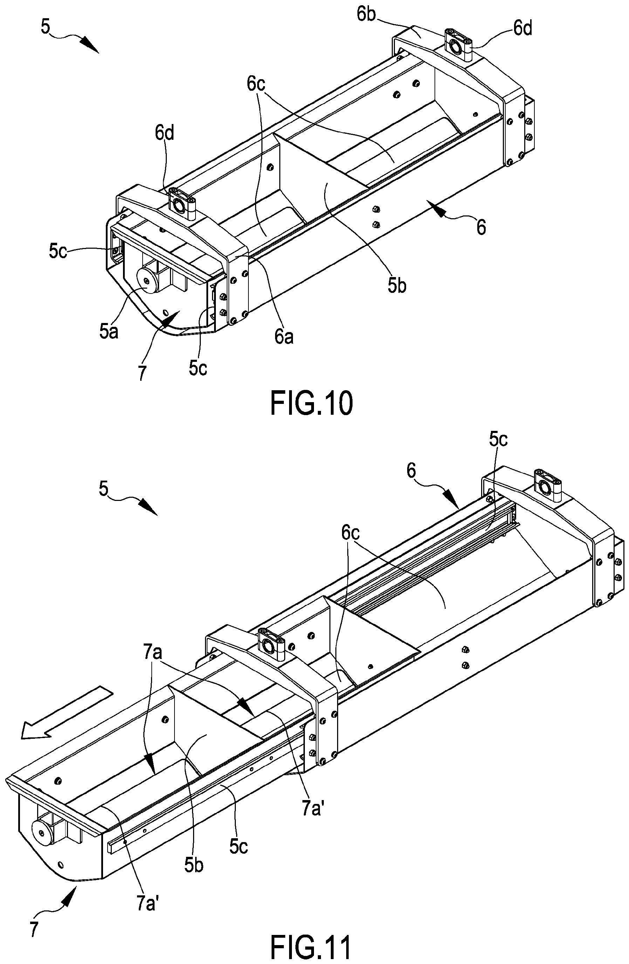

Storage 4 comprises a plurality of containers 5, each of which is configured to contain material to be released. In conditions of use of the apparatus 1, each container 5 is configured to operate at least between a laden condition and an unladen condition. In the laden condition, each container 5 contains material to be released above a predetermined threshold of material, while in the unladen condition each container 5 contains material to be released below a predetermined material threshold or is devoid of material to be released. The predetermined material threshold can correspond to a predetermined quantity of material, for example expressed in terms of mass or volume. The predetermined material threshold may be different for the laden condition and for the unladen condition. In particular, if two different material thresholds are provided, the predetermined material threshold of the laden condition is greater than the predetermined threshold of material of the unladen condition. Each container 5 can comprise an engagement element 5a. Each engagement element 5a can be in the form of a magnet or an electromagnet or a mechanical connecting element. Each container can further comprise one or more separation walls 5b defining a corresponding plurality of compartments of the container 5. Figures 10 and 11 illustrate a container 5 provided with a separation wall 5b which divides an internal volume of the extractable element 7 (and therefore of the container 5) in two compartments. Each compartment can have the same volume or one volume different than the other compartments and can house the same type of material or different materials than the other compartments.

In the embodiment illustrated in the attached figures, each container 5 comprises a supporting case 6 defining a housing volume and developing along a prevalent direction of development between a first end 6a and a second opposite end 6b. Advantageously, the separation wall 5b extends substantially orthogonally to the prevailing development direction of the container 5. In the embodiment illustrated in figures 10 and 11, the prevalent direction of the supporting case 6 coincides substantially with the prevalent development direction of the container 5. The supporting case 6 has a bottom 6c defining an occlusion portion configured to come into contact, at least in the laden condition, with the material to released. The supporting case 6 illustrated in the attached figures is without ceiling to allow the loading of material into the container 5 from above. In alternative embodiments, the supporting case 6 can have a top or upper portion opposed to the bottom and equipped with a through opening that allows the loading of material into container 5 from above. Alternatively, the supporting case 6 can be configured to allow loading of material laterally, for example in correspondence with a side of the supporting case 6. The supporting case 6 further comprises at least one constraint portion 6d, which can be defined at the first end 6a or at the second end 6b. As illustrated in figures 10 and 11, the supporting case 6 can have two constraint portions 6d opposite each other, each of which is defined at a respective end 6a, 6b of the supporting case 6.

In the embodiment illustrated in the attached figures, each container 5 also comprises an extractable element 7, which is coupled in an extractable way to the supporting case 6. The extractable element 7 can carry the engagement element 5a, which is integral with the extractable element 7 and is configured to facilitate the extraction of the extractable element 7 from the supporting case 6. As illustrated in figures 10 and 11, the engagement element 5a can be arranged at one end of the extractable element 7. The extractable element 7 is configured to operate between a rest condition, in which it is housed in the supporting case 6 (see figure 10), and an extraction condition, in which it is at least partially extracted from the supporting case 6 (see figure 11). In operating condition of the apparatus 1, in the extraction condition, the extractable element 7 passes through a window 2a of the box-like body and develops at least partially outside the box-like body 2 in such a way as to release material outside the internal volume of the box-like body 2. The extractable element 7 comprises an extraction portion 7a provided with at least one extraction opening 7a' which allows, in the extraction condition of the extractable element, the extraction of material. The extraction opening can be in the form of a through opening 7a' defined at least partially in correspondence with an upper portion or lateral or lower of the extractable element 7. As shown in figure 10, in the rest condition of the extractable element 7 the extraction portion 7a faces the occlusion portion 6c of the supporting case 6 in such a way as to prevent the extraction of the material contained from the container. In the embodiment of the container illustrated in figures 10 and 11, the extractable element 7 comprises a pair of extraction openings 7a' defined at a lower portion of the extractable element 7 and separated from the separation wall 5b. In apparatus 1 illustrated in the attached figures, the extraction of material occurs by gravity; in essence, the material contained by the container 5 falls downwards by gravity as a consequence of the extraction of the extractable element 7 from the supporting case 6. As illustrated in figures 10 and 11, the extraction of the extractable element 7 determines a relative movement between each opening of extraction 7a', which is moved integrally with the extractable element 7, and the occlusion portion 6c, which is substantially static; while in the rest condition the occlusion portion 6c occludes each extraction opening 7a', preventing the passage of material (see figure 10), in extraction condition each opening 7a' is not occluded by the occlusion portion 6c due to the above said movement, and therefore can release material contained by the container 5 (see figure 11, illustrating a partial extraction of the extractable element 7 according to which the material can be dispensed from the through opening 7a' extracted from the supporting case 6). The extractable element 7 is configured to be extracted from the supporting case 6 at the first end 6a or at the second end 6b to allow the extraction of material.

Each container 5 can further comprise at least one guide 5c configured to guide (in particular as a drawer) the extractable element 7 in the transition from the rest condition to the extraction condition. Guide 5c can be of the telescopic type and can be configured to allow extraction by translation of the extractable element 7 from the supporting case 6 for translation of the extractable element 7. Figures 10 and 11 show a container 5 equipped with opposed telescopic guides 5c, which allow the extraction by translation of the extractable element 7 from the supporting case 6. In further possible embodiments, the guide 5c can be configured to allow a rotation or a roto-translation of the extractable element 7 upon transition from rest condition to extraction condition; such movement of the extractable element 7 can be guaranteed, for example, by means of spiral or helical shaped guides. For example, in an embodiment in which the extractable element 7 can be equipped with a bottom and the extraction portion 7a can be defined in correspondence with an upper portion of the extractable element 7 (which can, for example, provide a ceiling with at least one through opening 7a'), the guide 5c can be configured to determine, upon extraction action of the extractable element, a roto-translation of the extractable element 7 in such a way as to overturn, in the extracted condition, the extractable element 7 and therefore allowing, at the extraction portion 7a, extraction of material contained in the container 5 by gravity.

As illustrated by way of example in figures 10 and 11, the extractable element 7 can be in the form of a drawer 7. In the embodiment wherein the storage 4 is configured to be loaded from the top, the extractable element 7 can be configured to be extracted from the supporting case 6 exclusively in correspondence of one between the first end 6a and the second end 6b; in this embodiment, the box-like body 2 can have a single window 2a facing the end 6a of the supporting case 6 from which the extractable element can be extracted and configured to allow the extraction of the extractable element 7 from the box-like body 2 in order to allow the extraction of material contained therein. In the embodiment in which the storage 4 is configured to be loaded laterally or rearward, the extractable element 7 can be configured to be extracted from the supporting case 6 both at the first end 6a, for example to allow the extraction of the material when the container 5 is in laden condition, and at the second end 6b, for example to allow the loading of the material in the rest condition of the container 5, or vice versa. The extraction of container 5 through the second end 6b can be a manual extraction or preferably an automatic extraction. In this embodiment, the box-like body 2 can provide a window 2a facing the first end 6a and configured to allow extraction of the extractable element 7 from box-like body 2, in order to allow the extraction of the material contained therein and a further window facing the second end 6b and configured to allow the extraction of the extractable element 7 from the box-like body 2, in order to allow the loading of material in the rest condition of the container 5. The apparatus 1 can further comprise at least one extraction sensor configured to detect a condition of extraction of the extractable element 7. The extraction sensor can be engaged to the supporting case 6 or to the extractable element 7; in the embodiment in which the extraction sensor is engaged to the supporting case 6, it can be engaged in correspondence or in proximity of the end of the supporting case 6 from which the extractable element 7 can be extracted. In the embodiment in which the extractable element 7 can be extracted from both ends of the supporting case 6, the apparatus 1 can have a pair of extraction sensors, each of which is engaged in correspondence to a respective end 6a, 6b of the supporting case 6. The apparatus 1 can comprise at least one limit switch sensor configured to detect the reaching of a limit switch by the extractable element upon transition of the extractable element 7 from the rest condition to the extraction condition and, in addition or alternatively, at the transition of the extractable element 7 from the extraction condition to the rest condition. The limit switch sensor can be engaged to the supporting case 6 or to the extractable element 7. In the embodiment in which the extraction sensor is engaged to the supporting case 6, it can be engaged in correspondence or in proximity of the end 6a, 6b of the supporting case 6 from which the extractable element can be extracted and inserted. In the embodiment in which the extractable element 7 can be extracted from both ends 6a, 6b of the supporting case 6, the apparatus 1 can present a pair of limit switches, each of which is engaged in correspondence to a respective end 6a, 6b of the supporting case 6. The extraction sensor and the limit switch sensor can be integrated with each other. The provision of at least one extraction sensor or at least one limit switch sensor allows to be automated with reference to the detection of the position of the extractable element 7. By detecting the position of the extractable element 7, these sensors allow the apparatus to operate in one of the possible operative conditions that it can implement when the extractable element 7 is this position. In the automatic selection of the operating condition in which to operate, a control unit 8 may be involved, which is described below.

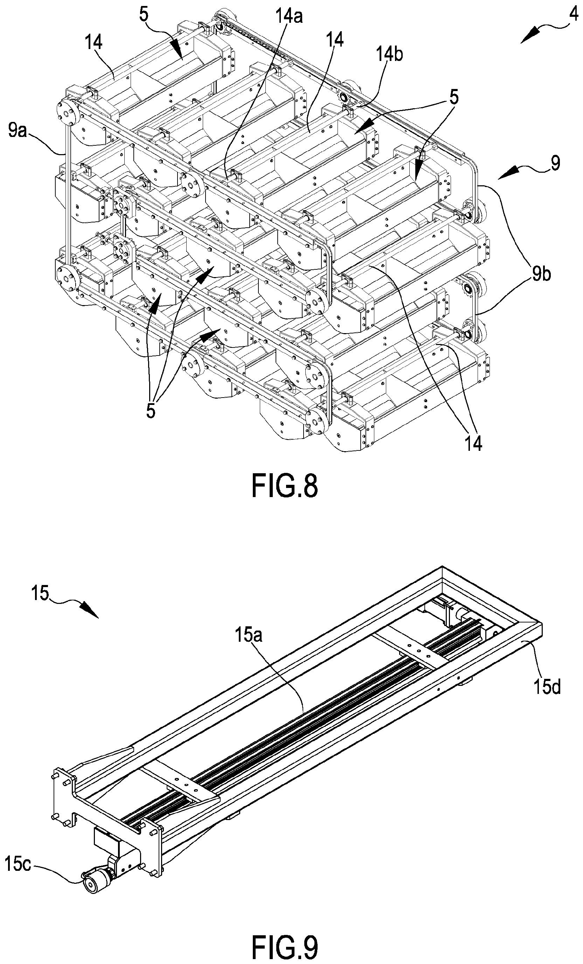

The storage 4 further comprises a handling device 9 configured to move the containers 5 along a closed path. Due to the possibility of moving the containers 5 by means of the handling device 9 along the closed path, the storage 4 is a dynamic storage (carousel). As illustrated by way of example in figure 8, due to the provision of a storage 4 equipped with a plurality of containers and a handling device 9 configured to move the containers 5 along a closed path, the apparatus 1 has a high capacity for loading material in a small space. The handling device 9 comprises at least one motorized chain 9a, 9b to which the containers 5 are engaged. The motorized chain 9a, 9b is configured for moving containers 5 along at least a portion of the closed path and defines the closed path or at least a portion of the closed path along which the containers 5 are moved. As illustrated in figure 8, the handling device 9 comprises a first motorized chain 9a and a second motorized chain 9b opposite to each other; each motorized chain 9a, 9b fully defines the closed path and is configured to handle the containers along it. The first motorized chain 9a and the second motorized chain 9b are synchronized with each other in such a way as to move the containers 5 along the closed path without relative scrolling. As shown in Figure 8, each motorized chain can have a "double C profile", since it allows to increase the compactness of the storage 4, ensuring the handling of a considerable number of containers 5, requiring at the same time a reasonably limited overall size.

The apparatus 1 further comprises at least one support rod 14 configured for pivotally support one or more containers 5. The pivoting support of the containers 5 is particularly advantageous since it allows to keep the containers 5 substantially in their correct orientation, independently from their position in the apparatus and regardless of whether the apparatus 1 is in a static phase (stationary containers 5) or in a dynamic phase (containers 5 moving). In fact, it appears quite evident that the maintenance of the orientation of the containers 5 is functional both to a stable transport of the material, and to an accurate execution of the material loading and dispensing operations.

In order to support one or more containers 5, the support rod 14 can be coupled to the supporting case 6 or to the extractable element 7. The support rod 14 can be coupled to the supporting case 6 in correspondence of the constraint portions 6d of the supporting case 6. The apparatus 1 preferably comprises a plurality of support rods 14, each of which supports a respective container 5. According to the embodiment illustrated in the attached figures, each container 5 pivots around the respective support rod 14. Support rods 14 and respective containers 5 are integral with each other. Each pivoting container 5 is configured to oscillate, with respect to a stable equilibrium position, around the respective support rod 14. The tilting containers 5 can oscillate during their movement and can assume the stable equilibrium position in a static condition in which they are stationary (they are not moved) with respect to the box-like body 2. Providing pivoting containers 5 allows the containers 5 to maintain the same orientation (with the bottom 6c of supporting case 6 facing downwards) in any position the container 5 assumes along the closed path. Each support rod 14 extends between a first end 14a and a second end 14b. The first motorized chain 9a is engaged with each support rod 14 at the first end 14a and the second motorized chain 9b is engaged to each support rod 14 at the second end 14b. In the embodiment illustrated in the attached figures, the first motorized chain 9a and the second motorized chain 9b synchronously move the support rods 14 along the closed path; in turn, since the containers 5 are integral with the respective support rods 14, the support rods 14 move the containers 5 along the closed path.

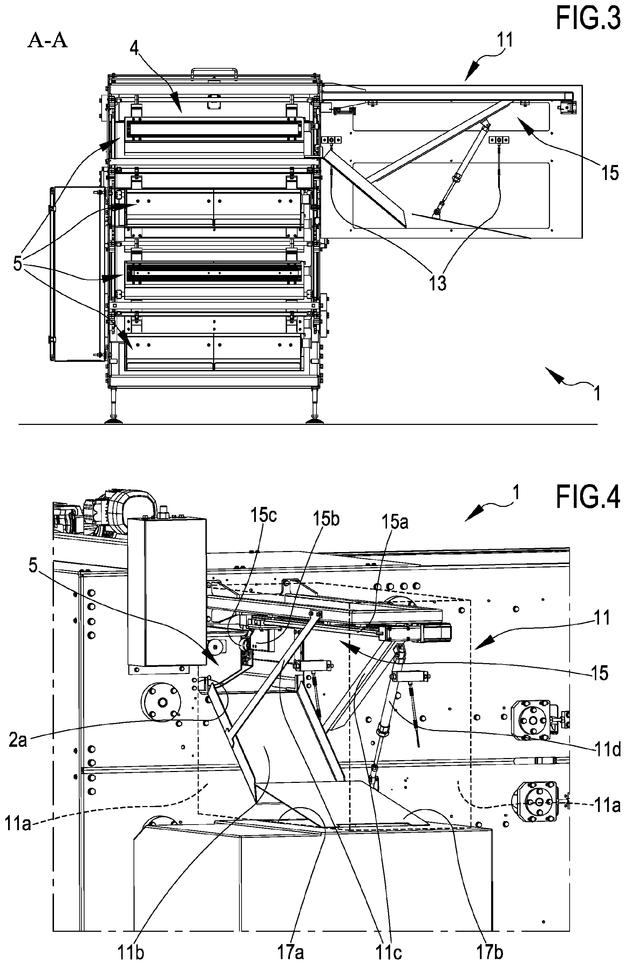

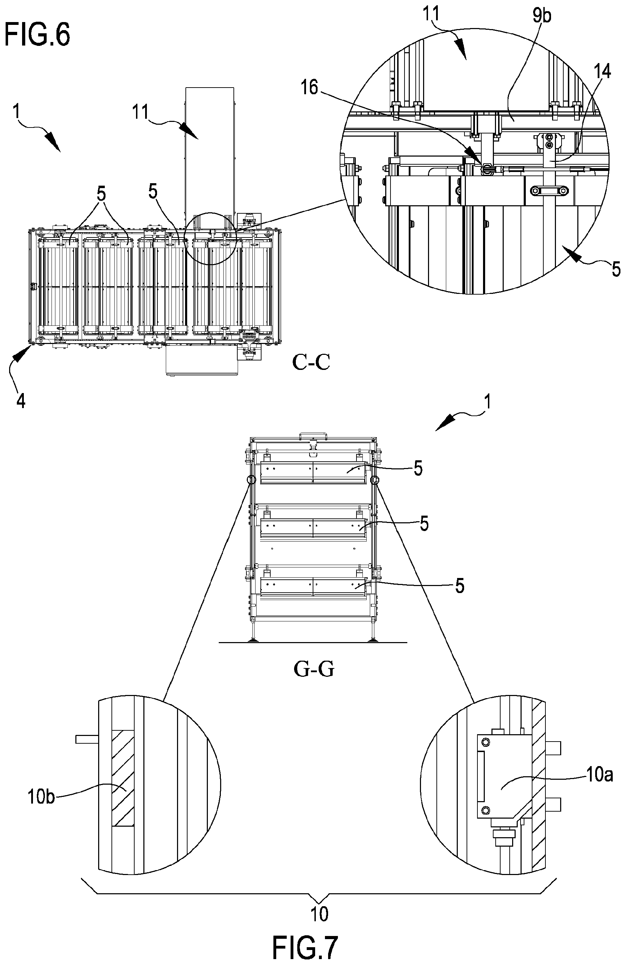

The apparatus 1 can further comprise at least one configured load sensor 10 to detect at least one of the laden condition and the unladen condition of a container 5, and in particular both. The load sensor 10 is configured to detect at least one between the laden condition and the unladen condition of the container 5 instantly placed in proximity or in correspondence with an extraction station 11 of apparatus 1 (described in detail below), in correspondence of which the extraction of material contained in the containers 5 takes place. Since the containers 5 can be moved along the closed path, the container 5 located in proximity or in correspondence with the extraction station 11 can vary from instant to instant. Figure 4 shows a container 5 located near the extraction station 11. Container 5 instantly positioned in proximity or in correspondence with the extraction station is substantially a container 5 containing material to be released (container 5 in laden condition) or whose material has just been dispensed (container 5 in unladen condition). The load sensor 10 can be arranged at a height corresponding to a height at which the extractable element 7 of the container 5 is instantly located near or in correspondence with the extraction station, can be extracted from the respective supporting case 6. As shown in figure 7, the load sensor 10 can comprise a light source 10a and a reflector 10b, opposed to each other and configured to cooperate with each other. In particular, the light source 10a and the reflector 10b are opposed to each other with reference to the container 5 instantly located near or in correspondence to the extraction station 11. The light source 10a is configured to emit, in conditions of use of the apparatus 1 and towards the reflector 10b, a light beam along an emission direction coincident or substantially parallel to the prevailing development direction of the container 5. The emission direction intercepts the reflector 10b. The reflector 10b is aligned to the emission direction of load sensor 10 and is configured to reflect back the light beam of along the emission direction towards the light source 10a. The load sensor 10 is also configured to detect the return of the light beam to the light source 10a. The load sensor 10 can be of the photoelectric type (even if different types of load sensors, for example of the laser type, can be alternatively contemplated). In the embodiment illustrated in Figure 7, the load sensor 10 is of the photoelectric type and the reflector 10b, which is aligned with light source 10a along the prevailing development direction of the container 5 developing in proximity to the extraction station 11, it is in the form of a reflective element.

When the light beam emitted by the light source 10a is not reflected by the reflector 10b (and therefore does not go back to the light source 10a), the load sensor 10 detects that the container 5 is in the laden condition; in fact, the light beam does not reach the reflector 10b as it is intercepted (for example, blocked) by the material contained in the container 5. When, instead, the light beam emitted by the light source 10a is reflected by the reflector 10b, it returns back to the light source 10a and this condition is detected by the load sensor 10. In this circumstance, the load sensor 10 detects that the container 5 is in the unladen condition; in fact, the light beam manages to reach the reflector 10b due to the absence of material in the container 5 or due to the presence of material in the container 5 below the predetermined material threshold. Provision of at least one load sensor 10 allows to automate the control of loading or emptying conditions of containers 5. Furthermore, if a single load sensor 10 is provided near the extraction station 11 and configured to operate on the container 5 located instantly in proximity or in correspondence with the extraction station 11, the apparatus 1 can advantageously control, automatically, the loading or emptying conditions, in turn, of all containers 5 minimizing the number of required load sensors 10. By detecting the loading or emptying condition of the containers 5, the load sensor 10 allows the apparatus 1 to operate in one of the possible operating conditions that it can implement when the extractable element 7 is in this condition. For example, if the container 5 located near the extraction station 11 is in the laden condition, the apparatus 1 can release the material, while, if it is in the unladen condition, the apparatus 1 can act on the handling device 9 to feed the extraction station 11 with a further container 5 in laden condition. The control unit 8 may be involved in the automatic selection of the operating condition in which to operate. Advantageously, when the containers 5 are configured to allow even partial material extractions, the extraction sensor can be further configured to detect the occurrence of a partial extraction and to discriminate it versus the occurrence of a full extraction. For example, based on the embodiment of figures 10 and 11, which provides for a separation in two chambers by means of the separation wall 5b, and therefore the possibility of separately and / or progressively extract the contents of the two chambers, an extraction sensor capable of detecting the laden or unladen condition of each chamber can advantageously be contemplated.

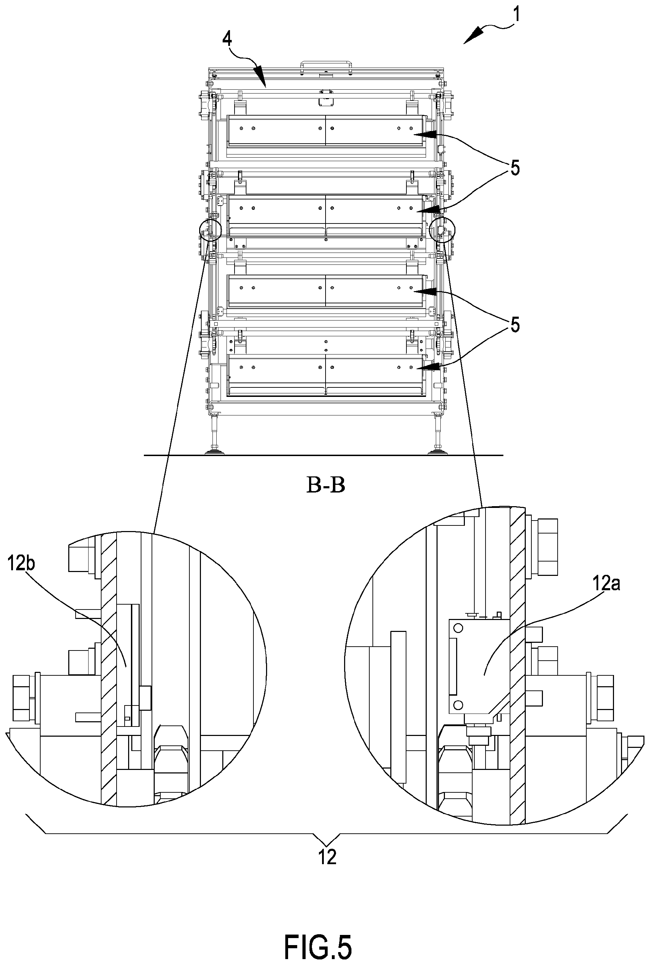

The apparatus 1 can further comprise at least one further load sensor 12 configured to allow to progressively calculate, in conditions of use of the apparatus 1, a number of containers which assume the unladen condition in order to monitor a prevailing unladen condition of the storage 4. The prevailing unladen condition of the storage 4 can be indicated by means of a user interface of the apparatus 1. In order to progressively calculate a number of containers 5 which assume the unladen condition, the further load sensor 12 can optionally comprise or be associated with a counter configured to track the number of containers 5 that progressively assume the unladen condition. The further load sensor 12 can be of the same type as the load sensor configured to detect at least one between the laden and the unladen condition of the container 5. In particular, as illustrated in figure 5, the further load sensor 12 can comprise a respective light source 12a and a respective reflector 12b of the previously described type, mutually opposite, aligned with each other and operating in accordance with what was previously described. The further load sensor 12 can be of the photoelectric type. The further load sensor 12 can be located at any point of the closed path described by containers 5; for example, the further load sensor can be arranged downstream, with reference to a direction of advancement of the handling device 9 along the closed path, of a position of the closed path defined in proximity of the extraction station 11 at which material is dispensed from container 5. Keeping track of the number of containers 5 that progressively assume the unladen condition downstream of this position allows to take into account each container 5 which assumes the unladen condition of as soon as, or immediately after, this has taken place. Preferably, in the embodiment illustrated in the attached figures, the further load sensor 12 can be arranged at a lower height than the height at which the load sensor 10 described in precedence; in this regard, see figure 5 and compare it with figure 7. In one embodiment, the functions of the load sensor 10 previously described and of the further load sensor 12 can be integrated and carried out by a single load sensor. The provision of a load sensor 12 configured to allow to progressively calculate, in conditions of use of the apparatus 1, the number of containers 5 which assume the unladen condition allows to automate the control of a prevailing unladen condition of the storage 4 in which a majority of the containers 5 or all the containers 5 assume the unladen condition. In this way, the apparatus 1 can be recharged with further material to be released when storage 4 is emptying.

The apparatus 1 may further comprise at least one sensor 13 configured to track the position of the container 5 during the extraction step of the extractable element, indicating the direction of travel. This sensor 13 can be of the inductive type. Figure 3 shows an apparatus 1 equipped with a pair of inductive sensors 13.

The apparatus 1 further comprises at least one extraction station 11 configured to release, in conditions of use of the apparatus, the material contained in at least one container 5. In conditions of use of the apparatus 1, the extraction station 11 is fed by at least one container 5 at a time by means of the handling device 9. The extraction station 11 comprises an extractor 15, which is configured to extract the extractable element 7 from the supporting case 6 of a container 5 arranged in correspondence or in proximity to the extraction station 11. In operating conditions of the apparatus 1, the extractor 15 allows, by means of extraction of the extractable element 7 of a container 5 arranged in correspondence or in proximity the extraction station 11, the extraction of material contained in the container 5. The extractor 15 is also configured to insert, subsequently to the extraction and extraction of material, the extractable element in the respective supporting case 6. In the embodiment illustrated in the attached figures, the extractor 15 is configured to operate by extracting the extractable element 7 from the supporting case 6 or when inserting the extractable element 7 into the supporting case 6, on one container 5 at a time; however, in alternative embodiments, the extractor 15 can be configured to operate simultaneously, in extraction of extractable elements 7 from the respective support bodies 6 or inserting extractable elements 7 in the respective support bodies 6, onto a plurality of containers 5 at a time. The extractor 15 is also configured to extract the extractable element 7 from the box-like body 6 in correspondence of the window 2a; for this purpose, the extractor 15 can develop in a suitable position with respect to the window. For example, as illustrated in figure 4, the extractor 15 can face the window 2a (see figure 4). Providing an extractor 15 configured to extract the extractable element 7 from the box-like body 2 advantageously allows the extraction of material contained in containers 5 outside the internal volume of the box-like body 2.

The extractor 15 comprises at least one rail 15a, advantageously a pair of rails 15a, and a slide 15b translatable along the rail 15a. The slide 15b is configured to translate towards and / or away from the supporting case 6 of a container 5 positioned in correspondence with or near the extraction station 11. The slide 15b can be moved by handling means associated with it, including for example an electric linear actuator with a worm screw. The movement of the slide 15b allows the extraction of the extractable element 7 from the respective supporting case 6 (to determine the material extraction) and insertion of the extractable element 7 in the respective supporting case 6 (after material extraction). The extractor 15 can also comprise an engagement element 15c integral with the slide 15b and configured to engage with the engagement element 5a of a container 5 positioned near or in correspondence with the extraction station 11, in order to allow the extraction of the extractable element 7 from the respective supporting case 6. Essentially, the engagement element 15c of the extractor 15 and the engagement element 5a of each container 5 are configured to be engaged with each other in order to determine the extraction of the extractable element 7 from the respective supporting case 6. The engagement element 15c of the extractor 15 can be of the same type of the engagement element 5a of each container 5; for example, the engagement element 15c of the extractor 15 can be in the form of a magnet or an electromagnet or a hook or more generally a mechanical connector. Advantageously, as illustrated in Figure 4, the apparatus 1 comprises a single extractor 15 configured to operate, in turn, on a plurality of containers 5. From a structural point of view, the guide 15a and the slide 15b can be at least partially supported by an extractor frame 15d, which is configured to engage the guide 15a and the slide 15b to the box-like body 2 near the window 2a.

The apparatus 1 further comprises a proximity sensor 16 configured to detect a condition of proximity of the container 5 to the extractor 15. The condition of proximity of the container 5 to the extractor 15 can be a condition in which the container 5 and extractor 15 are at a mutual predetermined distance, more particularly a condition in which the respective engagement elements 5a, 15c of container 5 and extractor 15 are aligned with a predetermined mutual distance. As illustrated in figure 6, the proximity sensor 16 can be arranged near the extraction station 11. The proximity sensor 16 can be integral with the container 5 and each container 5 can comprise one respective proximity sensor 16. Alternatively, a proximity sensor 16 can be provided in proximity of the extraction station 11 configured to detect the condition of proximity of the container instantly located in proximity or in correspondence with the extraction station 11; this proximity sensor 16 can operate on a plurality of containers 5. The provision of at least one proximity sensor 16 allows to automate the material extraction; providing information relating to the proximity (or not) of the container 5 to the extractor 15, the proximity sensor 16 allows the extractor 15 to be operated to extract the extractable element 7 only when the container 5 is in a suitable position.

As illustrated in figure 4, the extraction station 11 can comprise bulkheads 11a configured to delimit an extraction area for the material in correspondence of which, in conditions of use of the apparatus 1, the material contained in the extractable element 7 is dispensed from the extractor 15. The extraction station 11 may further comprise a conveyor configured to convey the material dispensed from the container 5 towards a specific area or station of the apparatus 1, for example towards an inlet 17a of a processing station 17 arranged downstream of the extraction station 11 and configured to process the dispensed material. The conveyor can extend between the window 2a of the box-like body 2 which the extractor 15 faces to and inlet 17a of the processing station 17. As illustrated in figure 4, the conveyor can be in the form of a chute 11b. The extraction station 11 can also have at least one support arm 11c configured for supporting and for engaging the extractor frame 15d to the conveyor. In this regard, figure 4 shows an extraction station 11 equipped with two support arms 11c opposed to each other, which engage the extractor frame 15d with the conveyor, in particular to chute 11b. The extraction station 11 can further comprise a regulator operating on at least one support arm 11c and configured for adjust the height of the extractor 15.

The apparatus 1 can comprise at least one processing station arranged downstream of the extraction station 11 and configured to process the dispensed material; in this regard, see figure 4, illustrating an embodiment of the apparatus 1 equipped with a processing station. In the embodiment illustrated in Figure 4, in which an apparatus 1 for automatically processing adhesive material (e.g., glue) is shown, the processing station can be represented by a melting station 17 configured to melt and bring to an adequate temperature the adhesive material dispensed at the extraction station 11.

Adhesive material can be supplied to the melting station 17 by means of the containers 5 in various forms, for example in the form of blocks (typically enclosed by means of a casing in heat-soluble material) or in granular form. Figure 4 illustrates a melting station 17 equipped with an inlet 17a configured to allow the entry of the dispensed material into an internal volume of the station 17 and a covering element 17b arranged above the inlet 17a. Downstream of the melting station 17, the apparatus 1 can provide an application station configured to apply the melted adhesive material to a substrate; the application station constitutes a further processing station. In order to allow the passage of the melted adhesive material from the melting station 17 to the application station, the application station is in fluid communication with the melting station 17, for example by means of suitable flexible piping.

In order to optimize the energy efficiency of the melting station 17, the present invention provides for minimizing the opening time of the covering element 17b, in particular by synchronizing it to the extraction of material by the extraction station 11. For this purpose, the present invention provides advantageously to associate to the extraction station 11 an actuator 11d (e.g., a pneumatic or hydraulic cylinder) aimed at determining the opening and subsequent closing of the covering element 17b of the melting station 17.

The apparatus 1 may further comprise a control unit 8. The control unit 8 is responsible for controlling the operating conditions set up by the apparatus 1. The control unit 8 is at least partially housed in the box-like body 2. The control unit 8 can be a single unit or be formed by a plurality of distinct control units according to design choices and operational needs. In the embodiments which provide a single control unit 8, it is preferably housed in the box-like body 2 (see, by way of example, figure 1). In embodiments which provide a plurality of distinct control units 8, at least one control unit or at least one partition thereof can be housed in the box-like body 2 and the other control units or partitions can be arranged outside the box-like body 2 and / or remotely from the apparatus 1. Alternatively, all control units 8 or partitions can be arranged remotely to apparatus 1.

The term "control unit" 8 refers to an electronic component which may comprise at least one of: a digital processor (CPU), a circuit of analog type, or a combination of one or more digital processors with one or more analog circuits. The control unit 8 can be "configured" or "programmed" to perform some phases (or operations): this can be practically done by any means that allow to configure or program the control unit. For example, in the case of a control unit 8 comprising one or more CPUs and one or more memories, one or more programs can be stored in appropriate memory banks connected to the CPU or CPUs; the program or programs contain instructions which, when executed by the CPU (s), program or configure the control unit 8 to perform the operations described in relation to the control unit. Alternatively, if the control unit 8 is or comprises analog circuitry, the circuit of the control unit 8 can be designed to include circuitry configured, in use, to process electrical signals to perform the steps relating to the control unit 8. By way of example, the control unit 8 of the apparatus 1 can be in the form of a programmable logic controller (PLC).

The control unit 8 can be communicatively connected with further elements or components of the apparatus 1 or with further external elements or components to apparatus 1. When the control unit 8 is described as "communicatively connected" with at least one element or component of the apparatus 1, means that the control unit 8 is connected to it so as to exchange (receive and / or send) with it at least one information or at least one instruction in any form, for example in the form of data such as data packages. In particular, the communication connection of the control unit 8 allows the control unit 8 to control, supervise and manage the elements and components to which it is communicatively connected. The communicative connection can be of the wired or non-wired type.

The control unit 8 is configured to communicate with at least one of the previously described sensors, in particular with all the previously described sensors, in order to allow the detection of one or more specific conditions, in accordance with what is described above or below. The provision of a control unit 8 configured to communicate with at least one sensor allows to automate the apparatus 1, with particular reference to the control of specific operating conditions of the apparatus 1. Procedures are described below, which allow the automatic processing of material by the apparatus 1, that the control unit 8 is configured to implement. The control unit 8 is communicatively connected with the handling device 9 and is configured to control the handling device 9 to automatically feed the extraction station 11, in conditions of use of the apparatus 1, with at least one container 5 at a time. For this purpose, the control unit can be configured to synchronize the first motorized chain 9a and the second motorized chain 9b, for example determining their movement at the same speed.

The control unit 8 is also configured to implement a procedure of feeding containers 5 to the extraction station 11 that provides for detecting the unladen condition of a first container 5 arranged in correspondence or in proximity to the extraction station and controlling the handling device to move the first container 5 away from extraction station 11 and to automatically feed the extraction station with a second container 5.

In order to optimize the procedure for feeding containers 5 to the extraction station 11, the control unit 5 is also communicatively connected with the load sensor 10 and is configured to implement a container 5 loading control procedure aimed at verifying the loading or emptying conditions of containers 5. This procedure requires that the control unit 8 is configured to receive at least one load information relating to the laden or unladen condition of the first container 5 detected by the load sensor 10 and control the handling device to move, or inhibit the movement of, the first container 5 and the second container 5 as a function of loading information relating to the laden or unladen condition of the first container 5 detected by the load sensor 10. If the control unit 8 detects, by means of the load sensor 10, that the first container 5 is in unladen condition, the control unit 8 can control the handling device 9 to move the first container 5 away from extraction station 11 and control the handling device 9 for moving the second container 5 towards the extraction station 11; the second container 5 with which the extraction station 11 is fed is in a laden condition and thus allows, when the first container 5 is in unladen condition, to continue the extraction of material from the extraction station 11 automatically. If the control unit 8 detects, by means of the load sensor 10, that the first container 5 is in the laden condition, the control unit 8 can inhibit movement, for example by stopping the handling device movement, of the first container 5 away from the extraction station 11 and inhibit movement, for example by stopping the handling device 9, of the second container approaching the extraction station 11; in this way, it's possible to finalize the material extraction from the first container 5 and its complete emptying before feeding a second container 5 to the extraction station 11.

The control unit 8 can also be configured to perform a procedure of detection of an unladen condition of the storage 4 which provides to progressively calculate, in conditions of use of the apparatus 1, a number of containers 5 that assume the unladen condition. The control unit 8 can determine that the storage 4 has reached a prevailing unladen condition when the number of containers in unladen condition exceed a certain threshold. Subsequently, the procedure for detecting an unladen condition of the storage 4 implemented from the control unit 8 can provide for reporting a prevalent unladen condition of storage 4 in which a majority of containers 5 or all containers 5 of the storage 4 assume the unladen condition. The reporting of the prevailing unladen condition of the storage 4 can be carried out through the user interface of the apparatus, to which the control unit 8 is communicatively connected. In order to perform the detection procedure of an unladen condition of the storage 4, the control unit 8 is also communicatively connected with the additional load sensor 12 previously described.

In order to release material from a container 5 arranged in correspondence or in proximity of the extraction station 11, the control unit 8 is also configured to manage a procedure for extracting the extractable element 7 from the respective supporting case 6. For this purpose, the control unit 8 is configured to determine the transition of the extractable element 7 from the rest condition to the extraction condition and, when the extractable element 7 is in the extraction condition, determine the extraction of material. The control unit 8 can be configured to control the extraction, in conditions of use of the apparatus 1, of the extractable element 7 from the respective supporting case 6 of the container 1 exclusively when the container 5 is in the laden condition.

In greater detail, in order to release material from a container 5 arranged in correspondence with or in proximity of the extraction station 11 the control unit 8 is communicatively connected with the extractor 15. The control unit 8 is also configured to manage a material extraction procedure that includes detecting a positioning of a container 5 in correspondence or in proximity of the extraction station 11, determining a coupling between the extractor 15 and extractable element 7 of the container 5 positioned in correspondence with or in proximity of the extraction station 11 and control the extractor 15 to extract at least partially the extractable element 7 from the supporting case 6 of the container 5.

The control unit 8 can be configured to extract the extractable element 7 from the respective supporting case 6 only when container 5 satisfies a proximity condition to the extractor 15. For this purpose, the control unit 8 is communicatively connected with the proximity sensor 16 and is configured to implement a procedure for verifying the position of the container 5 which provides to receive at least one proximity information relating to the proximity condition of the container 5 to the extractor 15 detected by the proximity sensor 16 and control the extractor 15 to at least partially extract the extractable element 7 from the supporting case 6 of the container 5 exclusively when the container 5 is in the proximity condition.

The control unit 8 can also be communicatively connected with the extraction sensor and can be configured to receive at least one extraction information relating to the extraction condition of the extractable element 7.

The control unit 8 can also be communicatively connected with the limit switch sensor and can be configured to receive, from the limit switch sensor, a limit switch information of the extractable element 7. The control unit 8 can be configured to finalize the extraction or insertion of the extractable element from or in the supporting case even in the event of an anomaly of the apparatus 1, such as a power failure to the apparatus 1 or a fault of the apparatus 1. For this purpose, the control unit 8 can be configured to detect an anomaly condition of the apparatus 1, check the current positioning of the extractable element 7 and, if the extractable element is in an intermediate condition between the rest condition and the extraction condition, or vice versa, check the extractor 15 to finalize the transition of the extractable element 7 from the rest condition to the extraction condition, and / or vice versa. Finalize the extraction or insertion of the extractable element 7 from or in the respective supporting case 6 allows to complete an extraction operation also in the event of an anomaly of the apparatus 1, completing the extraction of the material and / or putting the extractable element 7 back into the respective supporting case 6 at the end of the extraction. For example, if the extractable element 7 is in an intermediate position between rest condition and extraction condition at the moment when the anomaly occurs, the control unit 8 can be configured, for example on the basis of the specificity of the operating conditions of the apparatus 1 and / or of the material to be released, to control the extractor 15 alternatively to finalize the extraction of material bringing the extractable element 7 to the extraction condition and subsequently in the rest condition, or to control the extractor 15 to return the extractable element 7 to the rest condition by inserting the extractable element 7 in the respective supporting case 6.

The control unit 8 can be configured to start the extraction of material after detecting a sufficient laden condition of the storage 4. A possible sufficient laden condition of the storage 4 can foresee that a given number of containers 5 of the storage 4 assumes the laden condition or that all containers 5 of the storage 4 assume the laden condition. In a possible embodiment, the user interface may be configured to allow setting by an operator, after loading material into each container 5 of the storage 4, of a maximum load condition (or "zero point"); after setting the maximum load condition, the extraction of material can start under the control unit 8 supervision.

The control unit 8 is therefore responsible for driving the handling device 9, as well as the extraction station 11. In particular, the control unit 8 determines the activation of the moving means for the slide 15b (in order to vary its position along the rail 15a) and of the commitment element 15c, if it consists in particular of an electromagnet. Furthermore, the control unit 8 can be set up to activate the actuator 11d to cause commutations in the position of the covering element 17b of the melting station 17, as well as of further elements of the melting station 17, such as for example of heating elements to determine the melting of the glue. In a constructive solution aimed at a pushed integration of the control of the apparatus 1, it can also be contemplated that the control element 8 is also responsible for driving elements downstream of the melting station 17, for example of the applicator, if it is automatic.

According to a particularly advantageous embodiment (and in particular intended to ensure adequate storage conditions of the material processed by the apparatus 1), the containers 5 are associated with heating means and / or cooling means and / or ventilation means, operating on the material inside the containers 5, in particular by heating and / or cooling and / or airing it. The heating means and / or cooling means and / or ventilation means can be applied directly to the structure of the containers 5 (in this case, constructive measures may be provided for the purpose of conducting the electrical supply to the containers 5) or they can be applied to the box-like body 2 in such a way as to exert their action inside the box-like body 2, where the containers 5 are housed. Advantageously, the heating means and / or the cooling means and / or ventilation means (not shown in the figures) are operatively connected to the control unit 8, so as to be able to be activated and / or deactivated from the latter and / or subject to regulation.

In particular, the control unit 8 supervises the operation of the heating means and / or cooling means and / or ventilation means so as to allow the stationary material inside the containers 5 to be maintained at an adequate temperature and / or humidity, or in order to prepare the stationary material inside the containers 5 for the next use. Therefore, in controlling the heating means and / or the cooling means and / or the ventilation means the type of material processed by apparatus 1 is advantageously taken into account.

The apparatus 1 can then be associated with sensors intentionally configured to assist the control unit 8 in driving the heating means and / or the cooling means and / or ventilation means, such as for example at least one temperature sensor and / or at least one humidity sensor capable of detecting the temperature and / or humidity inside the box-like body 2. In this case, activation and / or deactivation and / or regulation of the heating means and / or the cooling means and / or ventilation means can be performed automatically by the control unit 8. It is however specified that a simplified variant of the invention (in which the activation and / or deactivation and / or the regulation of the heating means and / or the cooling means and / or the ventilation means are performed manually) is however contemplated within the scope of the present invention.

The apparatus 1 described here can be used for multiple applications. For purely explanatory but not limitative purposes, it can be used to process adhesive material according to what previously described, to process food material, such as animal feed, or to process any other type of material (for example inert material), where there is convenience in automating the management of material, with particular reference to extraction of material. In the case of adhesive material, the apparatus 1 can be arranged upstream of a melting station and / or an adhesive material application station. In the case of animal feed, the apparatus 1 can be arranged upstream of one or more supply lines for the distribution of feed.

### Method

The present invention also relates to a method for automatically processing material by means of the apparatus 1 of the type described above. The method first of all provides for the provision of an apparatus 1 of the type described above. In a preliminary step, the method can provide for loading the storage by filling each container 5 with material to be released until a sufficient loading condition of the storage 4 is reached, in accordance with what was previously described. The storage 4 can be loaded manually, for example by a trained operator, or automatically, for example by means of a robot or a robotic arm. In a possible embodiment, the method can provide that an operator manually loads material in each container 5 of the storage 4, sets a maximum load condition (or "zero point") via the user interface, and then begins the extraction of material under supervision of control unit 8. The user interface of apparatus 1, in addition to allowing the monitoring the apparatus 1 and determining the handling of the containers 5 and the activation of the extractor 15, is also configured to allow the operator to program material release cycles by means of apparatus 1.

The method provides for automatically feeding the extraction station 11 with at least one container 5, containing material to be released by handling of at least one container 5. The method preferably provides for moving at least one container by moving a plurality of containers 5, and in particular all the containers 5 of the storage 4. The handling of the containers 5 is carried out by means of the handling device 9 along a closed path; the handling device 9 provides for moving the containers 5 integrally with the respective support rods 14 moved by the motorized chains 9a, 9b. The method therefore provides for releasing the material contained by the container 5 in correspondence with the extraction station 11 automatically and under the supervision of the control unit 8. The supervision of the control unit 8 takes place, in particular by means of suitable sensors, in accordance with what has been previously described.

The material extraction step involves extracting the extractable element 7 from the respective supporting case 6 by means of the extractor 15, which moves the extractable element 7 by means of the engagement elements 5a, 15c and determines its extraction.

The extraction of material can be carried out if the container 5 is in a condition of proximity with the extractor 15.

Once the unladen condition of a first container 5, fed to the extraction station 11, has been reached, the method can provide for feeding a second container 5 in a laden condition at the extraction station 11 and so on with further containers, to determine a sequence of material extraction automatic and manageable by the control unit 8.

### ADVANTAGES OF THE INVENTION

The present invention allows to obtain the automatic processing of material to be released.

The invention also allows material to be processed reliably and efficiently.

The present invention allows material to be processed safely and without risks for any operators who interface with the equipment 1. The present invention is therefore able to ensure considerable safety for operators, as their interactions with moving parts are minimized.

The invention allows to increase productivity in terms of the amount of material processed and delivered per unit of time.

Especially if in the apparatus 1 there are in particular heating means and / or cooling means and / or ventilation means, the present invention allows to process material while ensuring adequate storage conditions.

With regard in particular to the application of glue, the present invention allows the feeding of the melting station 7, so that the operation of the latter is safe, reliable and efficient.

The above advantages are shared by the apparatus 1 for automatically processing material and the method for automatically processing material in accordance with the invention.

The apparatus 1 according to the invention advantageously presents, due to the provision of a storage 4 of the type described above, a high capacity to load material in a limited space, as well as particularly fast material processing times. It is therefore emphasized that the present invention allows to optimize the processing of material, with consequent favorable effects on processing times and costs. It is also emphasized as the present invention, although it has been described with reference to particular embodiments, nevertheless lends itself to numerous variants which, sharing the inventive contents of the present invention, also fully fall within the scope of protection defined by the following claims.

## Claims

1. Apparatus (1) for processing material, in particular automatically, said material being in particular adhesive material such as glue, said apparatus (1) comprising:
- a storage (4) configured to store material to be released, said storage (4) comprising a plurality of containers (5) and a handling device (9), each of said containers (5) being configured to contain material to be released, said handling device (9) being configured to move said containers (5) along a closed path,
- an extraction station (11) located downstream of the handling device (9) with reference to an advance direction of the material to be released along the apparatus (1) and configured to release, when the apparatus (1) is in use, said material,
- a control unit (8) communicatively connected with the handling device (9) and configured to control the handling device (9) so as to supply automatically, when the apparatus (1) is in use, the extraction station (11) with at least one container (5) at a time.

2. Apparatus (1) according to claim 1, wherein each container (5) is configured to operate at least between a laden condition and an unladen condition, in the laden condition each container (5) carrying material to be released above of a predetermined threshold of material and in the unladen condition each container (5) carrying material to be released below a predetermined threshold of material or being devoid of material to be released, the control unit (8) being configured, when the machine is in use, to:
- detect the unladen condition of a first container (5) of said plurality of containers (5) arranged in correspondence or in proximity of the extraction station (11),
- optionally check the handling device (9) so as to move the first container (5) away from the extraction station (11),
- check the handling device (9) so as to supply automatically the extraction station (11) with a second container (5).

3. Apparatus (1) according to claim 2, further comprising at least one load sensor (10) configured to detect at least one of the laden condition and the unladen condition of the container (5), the control unit (8) being communicatively connected with the load sensor (10) and being configured to:
- receive at input at least one piece of information about loading, regarding the laden condition or the unladen condition of the first container (5) detected by the load sensor (10),
- check the handling device (9) in order to move, or inhibit the movement of, the first container (5) and/or the second container (5) according to said piece of information about loading, with regard to the laden condition or the unladen condition of the first container (5) detected by the load sensor (10),
optionally wherein said apparatus (1) comprises at least one access door (3) for loading material into said containers (5), the operation of said handling device (9) being in particular inhibited when an open condition of this access door is detected,
wherein in particular the container (5) has an elongated shape extending along a prevailing direction of development, the load sensor (10) comprising a light source (10a) configured to emit, when the apparatus (1) is in use, a light beam along an emission direction, coincident or substantially parallel to said prevailing direction of development, the load sensor (10) further comprising a reflector (10b), for example a reflective device, aligned with said direction of emission and configured to reflect back the light beam along the direction of emission towards the light source (10a), the light source (10a) and the reflector (10b) being opposite to the container (5) along said prevailing direction of development.

4. Apparatus (1) according to claim 2 or claim 3, wherein the control unit (8) is configured to:
- progressively calculate, when the apparatus (1) is in use, a number of containers (5) getting into the unladen condition,
- report a prevailing laden condition of the storage (4) wherein a majority of the containers (5) of said plurality of containers (5) or all the containers (5) of said plurality of containers (5) get into the unladen condition.

5. Apparatus (1) according to any one of the preceding claims, wherein at least one of said containers (5), in particular each of said containers (5), is associated with heating means and/or cooling means and/or ventilation means, said heating means and/or said cooling means and/or said ventilation means being suited for operating on the material contained in said at least one of said containers (5), in particular on the material contained in each of said containers (5).

6. Apparatus (1) according to any one of the preceding claims, wherein each container (5) comprises a supporting case (6) and an extractable element (7), such as a drawer, joined to the supporting case (6) in an extractable manner and configured to operate between a rest condition, wherein the extractable element (7) is housed in the supporting case (6), and an extraction condition, wherein the extractable element (7) is at least partially pulled out from the supporting case (6),
the control unit (8) being configured to:
- determine the transition of the extractable element (7) from the rest condition to the extraction condition,
- in the extraction condition of the extractable element (7), determine the extraction of the material,
optionally wherein the extractable element (7) is articulated with respect to the supporting case (6) in such a manner that the position of the extractable element (7) with respect to the supporting case (6) can be varied by means of a translation or a roto-translation of the extractable element (7).

7. Apparatus (1) according to claim 6, wherein the supporting case (6) comprises an occlusion portion (6c), the extractable element (7) comprising an extraction portion (7a) facing, in the rest condition of the extractable element (7), the occlusion portion (6c), the extraction portion (7a) having at least one extraction opening (7a') configured to allow the extraction, in the extraction condition of the extractable element (7), of said material, in the rest condition of the extractable element (7) the portion of the occlusion portion (6c) being configured to come into contact with the material to be released, optionally wherein the supporting case (6) comprises a bottom (6c), the occlusion portion being defined by said bottom (6c), the extraction portion (7a) of the extractable element (7) being a lower portion of the extractable element (7) facing, in the rest condition of the extractable element (7), said bottom (6c) and/or optionally wherein each container (5) is supported in a pivoting manner by a corresponding support rod (14).

8. Apparatus (1) according to claim 6 or claim 7, further comprising an extractor (15) configured to extract the extractable element (7) of a container (5) arranged in correspondence or in proximity of the extraction station (11), the control unit (8) being communicatively connected with the extractor (15) and being configured to:
- detect a placement of a container (5) in correspondence with or in proximity of the extraction station (11),
- determine a coupling between the extractor (15) and the extractable element (7) of said container (5) positioned in correspondence or in proximity of the extraction station (11),
- check the extractor (15) so as to pull out at least partially the extractable element (7) from the supporting body (6) of said container (5).

9. Apparatus (1) according to claim 8, further comprising at least one proximity sensor (16) configured to detect a proximity condition of the container (5) to the extractor (15), the control unit (8) being communicatively connected with the proximity sensor (16) and being configured to:
- receive at its input at least one piece of information of proximity regarding the proximity condition of the container (5) to the extractor (15) as detected by the proximity sensor (16),
- check the extractor (15) so as to pull out at least partially the extractable element (7) from the supporting case (6) of said container (5) only when the container (5) is in said proximity condition,
optionally the extraction of the container (5) being determined by the implementation of devices such as at least one constraint element (15c) and/or at least one actuator for setting a slide in motion (15b).

10. Method for processing material, in particular automatically, comprising the following steps:
- arranging an apparatus (1) according to any of the preceding claims,
- loading automatically the extraction station (11) with at least one container (5) carrying material to be released, the step of loading automatically the extraction station (11) with at least one container (5) carrying material to be released comprising the step of moving, by means of the handling device (9), said at least one container (5) along a closed path,
- releasing the material carried in said at least one container (5) at the extraction station (11).
